**Europäisches Patentamt**

(19) **European Patent Office**

**Office européen des brevets**

(11) Veröffentlichungsnummer : **0 013 935**
**B2**

(12) **NEUE EUROPÄISCHE PATENTSCHRIFT**

(45) Veröffentlichungstag der neuen Patentschrift :
26.04.89

(51) Int. Cl.⁴ : **A 01 K 1/015, A 01 K 23/00**

(21) Anmeldenummer : **80100200.7**

(22) Anmeldetag : **16.01.80**

(54) Verwendung von Calciumsilikathydratgranulaten bzw.-pulvern als Tierstreu.

(30) Priorität : **19.01.79 DE 2902079**

(43) Veröffentlichungstag der Anmeldung :
**06.08.80 Patentblatt 80/16**

(45) Bekanntmachung des Hinweises auf die Patenterteilung : **17.02.82 Patentblatt 82/07**

(45) Bekanntmachung des Hinweises auf die Entscheidung über den Einspruch : **26.04.89 Patentblatt 89/17**

(84) Benannte Vertragsstaaten :
**AT BE CH FR GB IT LU NL SE**

(56) Entgegenhaltungen :
EP–A– 0 007 586
DE–A– 2 640 341
DE–A– 2 930 060
FR–A– 2 369 868
SE–A–78 105 665
US–A– 3 144 346
Dampfgehärtete Baustoffe, H. Grundlach, Bauverlag GmbH Wiesbaden/Berlin 1973 S. 155,156,210,218-222
Tonindustrie-Zeitung 91 (1967) Nr. 11, S. 448
The Merck-Index (1968) S. 195, 196
Römpps-Chemielexikon (1972) S. 483
Chemical Material Catalog (1970)
Lexikon der Hilfsstoffe für Pharmazie, Kosmetik...(1971)S. 98, 673
Celite Bulletin Technique (Firme. Johns-Manville de France)
Handbook of Chemistry and Physics, 31. Auflage, S. 1288, 1289
Veröffentlichungsschrift des Vortrages Nr. 29 des 2. Internat. Symposiums für dampfgehärtete Kalciumsilikat-Baustoffe 1969
K. Schiefer "Lexikon der Verfahrenstechnik", Band 16 (1970), DEUTSCHE VERLAGS-ANSTALT, STUTTGART (DE), S. 513 und 514
Rilem International Symposium on autoclaved aerated concrete, 29. bis 31. März 1982, Lausanne; "preprints", S. 53 bis 84

(73) Patentinhaber : **MARS INCORPORATED**
**Westgate Park 1651 Old Meadow Road**
**McLean Virginia 22102 (US)**

(72) Erfinder : **Krämer, Walter**
**Uhlenkamp 1**
**D-3040 Soltau-Friedrichseck (DE)**
Erfinder : **Follmann, Rainer, Dr. Dipl-chem.**
**Blumenstrasse 22**
**D-4950 Minden (DE)**

(74) Vertreter : **Goddar, Heinz J., Dr. et al**
**FORRESTER & BOEHMERT Widenmayerstrasse 4/I**
**D-8000 München 22 (DE)**

**Beschreibung**

Die Erfindung befrifft die Verwendung von porösen Calciumsilikathydratgranulaten bzw. -pulvern als Tierstreu.

Bei den bekannten Tierstreuen handelt es sich im wesentlichen um Naturprodukte mineralischen oder·organischen Ursprunges, wie Bimstein Tonmineralien, beispielsweise Sepiolithe, Holzmehle und Kieselgur, die auf Grund ihrer natürlichen Porosität hydrophile und/oder lipophile Eigenschaften besitzen. Organische Produkte haben jedoch den Nachteil von unerwünschten Nebenwirkungen bei ihrer Verwendung, wie ihre Brennbarkeit. Andererseits neigen mineralische Produkte (z. B. beschrieben in der FR-A-2 369 868) wie Tonmineralien, durch Aufnahme von Flüssigkeiten, hauptsächlich nach Erreichen der Saugkapazität, in der Regel zum Quellen und damit zu einer plastischen Konsistenz (Erweichen) sowie zum Verklumpen. Noch ausgeprägter ist dies bei Kieselgur, welches stark klebrig, schmierig und sogar breiig wird. Diese nachteiligen Eigenschaften führen zwangsläufig zu Schwierigkeiten bei der Handhabung derartiger Produkte. Bimsstein hat den Nachteil der zu geringen Saugfähigkeit. Daher wird er mit Sepiolithen vermischt verwendet, was wiederum die genannten schwerwiegenden Nachteile der letzteren mit sich bringt. Die DE-A-2 640 341 lehrt die Verwendung von Zuschlagstoffen wie Quarzsand, Bimssand, Flugasche und dergleichen, zusammen mit Treibmitteln, wie Aluminium, Wasserstoffperoxyd, Chlorkalk oder dergleichen sowie Bindemitteln, wie Zement, Kalk, Brandkalk oder Gips, zur Herstellung von Tierstreuen, jedoch treten auch dabei naturgemäß die vorstehend beschriebenen Schwierigkeiten auf.

Da es sich bei den bekannten Tierstreuen vorzugsweise um Naturprodukte handelt, haben sie auch noch den Nachteil, daß sie in der Regel einer größeren Variationsbreite hinsichtlich ihrer chemischen und mineralischen Zusammensetzung unterliegen und sich in der Art und Menge ihrer Verunreinigungen unterscheiden. Durch Abmischen beispielsweise mit Sand wird eine Kompensation dieser bekannten Nachteile angestrebt, was jedoch zwangsläufig infolge einer Konzentrationsverminderung der wirksamen Bestandteile zu einer verminderten Saugfähigkeit der Produkte führt, ohne die genannten nachteiligen Eigenschaften effektiv aufzuheben.

Der Erfindung liegt die Aufgabe zugrunde, unter Behebung der Nachteile des Standes der Technik eine neue Tierstreu mit niedrigem Schüttgewicht mit besserer Saugfähigkeit, und zwar beschleunigtem Aufsaugvermögen bei besserer Saugkapazität (Speichervolumen) und gleichmäßigem Körnungsaufbau, welche nicht quellend, nicht klebend und nicht schmierend ist, mit Harnsäure keine Geruchsbildung ergibt, sondern im Gegenteil geruchsbindend und ferner bakterizid sowie nicht staubend und nicht färbend ist, zu schaffen.

Erfindungsgemäß wird diese Aufgabe gelöst durch Verwendung von porösem Calciumsilikathydratgranulat bzw. -pulver mit Mikroporenstruktur mit Porenradien von weniger als 100 $\mu$m, insbesondere weniger als 60 $\mu$m, ganz besonders 10 bis 20 $\mu$m, welches durch Umsetzen von kristallinem und ggf. amorphen Siliziumdioxid bzw. dieses oder diese enthaltenden Materialien mit Calciumoxid bzw. dieses enthaltenden Materialien in einem Molverhältnis von CaO zu SiO$_2$ von 0,8 : 1 bis 1,1 : 1 unter Homogenisieren derselben durch Dispergieren der festen Ausgangsstoffe in Wasser unter Zugabe einer vorher in Wasser in Gegenwart von Luft in einen Schaum überführten anionenaktiven grenzflächenaktiven Substanz und Formen sowie Autoklavenhärten erzeugt worden ist, mit der weiteren Maßgabe, daß als Schaum ein mikroporiger stabiler Schaum, welcher aus einer durch Verdünnen mit Wasser bereiteten Lösung der anionenaktiven grenzflächenaktiven Substanz in feinster Verteilung in komprimierter Luft erzeugt worden ist und ein Litergewicht von 30 bis 80 g/l aufweist, verwendet worden ist, wobei die anionenaktive grenzflächenaktive Substanz in einer Menge von etwa 300 bis 600 g/m$^3$ Fertigprodukt eingesetzt und das gehärtete Produkt in an sich bekannter Weise zerkleinert, getrocknet und klassiert worden ist, als Tierstreu.

Eine derartige Tierstreu läßt sich durch Umsetzen von kristallinem und gegebenenfalls amorphem Siliciumdioxyd beziehungsweise dieses oder diese enthaltenden Materialien mit Calciumoxyd beziehungsweise dieses enthaltenden Materialien in einem Molverhältnis von CaO zu SiO$_2$ von 0,8 : 1 bis 1,1 : 1 unter Homogenisieren derselben in Wasser und Formen, Autoklavenhärten, Zerkleinern, Trocknen und Klassieren mit der weiteren Maßgabe, daß das Homogenisieren bei der Umsetzung durch Dispergieren der festen Ausgangsstoffe im Wasser unter Zugabe einer vorher in Wasser in einen mikroporigen stabilen Schaum überführten anionenaktiven grenzflächenaktiven Substanz durchgeführt worden ist, herstellen. Dieses Verfahren und der damit hergestellte Stoff sind Gegenstand der EP-A-0 007 586 (Stand der Technik gemäß Artikel 54 (3) EPÜ). Die Produktstruktur mit den festgelegten Porenradien der Calciumsilikatgranulate bzw. -pulver, die erfindungsgemäß als Tierstreu verwendet werden, ist von großer Bedeutung, da sie die angestrebten Produkteigenschaften, wie die hohe Saugkapazität und niedrige Rohdichte (Schüttgewicht) sowie hohe Druckfestigkeit, sicherstellt. Als anionenaktive grenzflächenaktive Substanz kann vorteilhafterweise eine solche (als Lösung) mit einem Aktivsubstanzgehalt (vor dem Lösen in Wasser) von 30 bis 60 %, beispielsweise 50 %, verwendet worden sein. Es können aber auch durch Wasserentzug durch Trocknung erhaltene pulverförmige Produkte mit einem Aktivsubstanzgehalt bis zu 100 % eingesetzt worden sein. Zweckmäßig ist die Konzentration der anionenaktiven grenzflächenaktiven Substanz in Wasser für den zum Homogenisieren zuzusetzenden mikroporigen stabilen Schaum bei Verwendung einer anionenaktiven grenzflächenaktiven Substanz mit einem Aktivsubstanzgehalt von 100 % zu etwa 1,0 bis 2,5 %, insbesondere 1,5 %, und bei Verwendung einer anionenaktiven grenzflächenaktiven Substanz mit einem Aktivsubstanzgehalt von 30 bis 60 % zu etwa 1,5 bis 3,5 %, insbesondere 2 %, gewählt worden. Soweit keine anionenaktive grenzflächenaktive Substanz mit einem Aktivsubstanzgehalt von 100 % verwendet worden ist, beziehen sich diesen Konzentrationsangaben auf das Produkt, wie es tatsächlich eingesetzt wurde, das heißt das, gegebenenfalls unreine, Chemieprodukt. Beispielsweise entspricht dann einer Konzentration der verwendeten anionenaktiven grenzflächenaktiven Substanz in Wasser von 2 % bei einem Aktivsubstanzgehalt der ersteren von 50 % eine Konzentration von 1 % reiner grenzflächenaktiven Substanz in Wasser. Ein Beispiel für eine verwendbare anionenaktive grenzflächenaktive Substanz ist Natriumlaurylsulfat. Die Erzeugung des mikroporigen stabilen Schaumes wird mittels komprimierter Luft durchgeführt. In der komprimierten Luft, die beispielsweise in einem Aktivschaumgenerator erzeugt worden ist, wird in feinster Verteilung die durch Verdünnen mit Wasser bereitete Lösung der anionenaktiven grenzflächenaktiven Substanz zu einem mikroporigen stabilen Schaum umgewandelt. Als mikroporiger stabiler Schaum wird ein solcher mit einem Litergewicht von 30 bis 80 g/l, insbesondere 50 bis 60 g/l, verwendet, wobei die anionenaktive grenzflächenaktive Substanz (unverdünnt gerechnet) in einer Menge von etwa 300 bis 600 g/m$^3$ Fertigprodukt verwendet wird.

Vorzugsweise werden die erfindungsgemäß verwendeten Calciumsilikatgranulate bzw. -pulver mit den festgelegten Porenradien zu 100 % oder nahezu 100 % bei einer bestimmten Tierstreu eingesetzt. Das Calciumsilikatgranulat kann aber auch mit bekannten Tierstreuprodukten, wie Sepiolithen, oder inerten Materialien, wie Sand, vermischt vorliegen, in welchem Falle aber die gewünschten Produkteigenschaften, wie das Absorptionsvermögen, weniger günstig sind, gemischt werden.

Die durch die erfindungsgemäße Verwendung geschaffenen Tierstreuen haben ein niedriges Schüttgewicht und eine hohe Korneigenfestigkeit und damit hohe Druckfestigkeit. So können sie Schüttgewichte bis hinunter zu 250 kg/m$^3$ und Druckfestigkeiten bis 10,2 N/mm$^2$ (Newton/Quadratmillimeter) [1 Newton/Quadratmillimeter = 10 kp/cm$^2$] haben. Ein großer Vorteil der erfindungsgemäß geschaffenen Tierstreuen ist es, daß ihre Calciumsilikatgranulate beziehungsweise -pulver bei hoher Saugfähigkeit im Gegensatz zu den saugfähigsten Produkten des Standes der Technik selbst bei optimaler Nutzung nicht quellend, nicht klebend und nicht schmierend sind, also keinem Erweichen unterliegen, andererseits aber auch nicht stauben. Darüber hinaus sind sie auch nicht färbend. Hinzu kommt als weiterer Vorteil der gleichmäßige Körnungsaufbau der Calciumsilikatgranulate beziehungsweise -pulver der erfindungsgemäßen Tierstreuen. Zweckmäßig ist ihre Korngröße, welche durch Klassieren eingestellt werden sein kann, bis 5 mm, insbesondere 1 bis 4 mm.

Ein weiterer Vorteil der erfindungsgemäßen Verwendung ist es, daß bei den hierdurch geschaffenen Tierstreuen auch bei optimaler Flüssigkeitssättigung unter Druckbelastung kein Flüssigkeitsaustritt stattfindet. Die Tierstreuen sind hydrophil ab- bzw. adsorbierend. Unter « hydrophiler Ab- bzw. Adsorption » ist die Ab- bzw. Adsorption von Wasser und wäßrigen Medien, beispielsweise Urin, zu verstehen. Die Calciumsilikatgranulate bzw. -pulver, die erfindungsgemäß als Tierstreu verwendet werden, haben einen alkalischen pH-Wert von im allgemeinen 8,7 bis 10, vorzugsweise 9 bis 10, insbesondere 9,4 bis 9,8. Daher wirken sie säurebindend. Beispielsweise vermögen sie die geruchbildenden Verbindungen, wie Harnsäure, im Tierharn chemisch zu neutralisieren und damit ohne Zusätze geruchbindend zu wirken, was einen großen Vorteil der erfindungsgemäßen Verwendung darstellt. Ein weiterer Vorteil der erfindungsgemäßen Verwendung ist die bakterizide Wirkung der Calciumsilikatgranulate bzw. -pulver. Ein bevorzugtes Anwendungsgebiet der durch die erfindungsgemäße Verwendung geschaffenen Tierstreuen ist das für Katzen (Katzenstreu). Zusammenfassend bringen sie durch die erfindungsgemäße Verwendung geschaffenen Tierstreuen gegenüber den bekannten Tierstreuprodukten den großen Vorteil mit sich, daß bei überlegenem Ab- beziehungsweise Adsorptionsvermögen (hohe Saugkapazität und beschleunigte Aufsaugung) ihrer Calciumsilikatgranulate beziehungsweise -pulver diese auch noch wie bereits erwähnt nicht nur form- und konsistenzbeständig, sondern auch geruchbindend und bakterizid sind.

Wie bereits erwähnt sind die Calciumsilikatgranulate beziehungsweise -pulver der erfindungsgemäßen Tierstreuen an sich schon geruchbindend. Es ist aber auch möglich, solche mit einem Zusatz von Deodorierungsmitteln, wie Parfümölen, die auf sie aufgebracht worden sein können, zu verwenden.

Gegebenenfalls können bei der erfindungsgemäßen Verwendung die Calciumsilikatgranulate bzw. -pulver mit einem Zusatz von Farbindikatoren zur Kontrolle des Sättigungsgrades der Ab- beziehungsweise Adsorption vorliegen. Dadurch kann die verwendete Tierstreu jeweils im richtigen Augenblick ausgewechselt werden.

Die Erfindung wird an Hand der folgenden Beispiele in Verbindung mit den beiliegenden Zeichnungen näher erläutert. Hierbei sind

Fig. 1 das Fließschema der Herstellung einer Tierstreu nach einer Ausführungsform der Erfindung und

Fig. 2 das Diagramm der Wasseraufnahme mit der Zeit einer erfindungsgemäßen Tierstreu und eines Handelsproduktes auf Sepiolithbasis als Vergleichssubstanz.

Beispiel 1

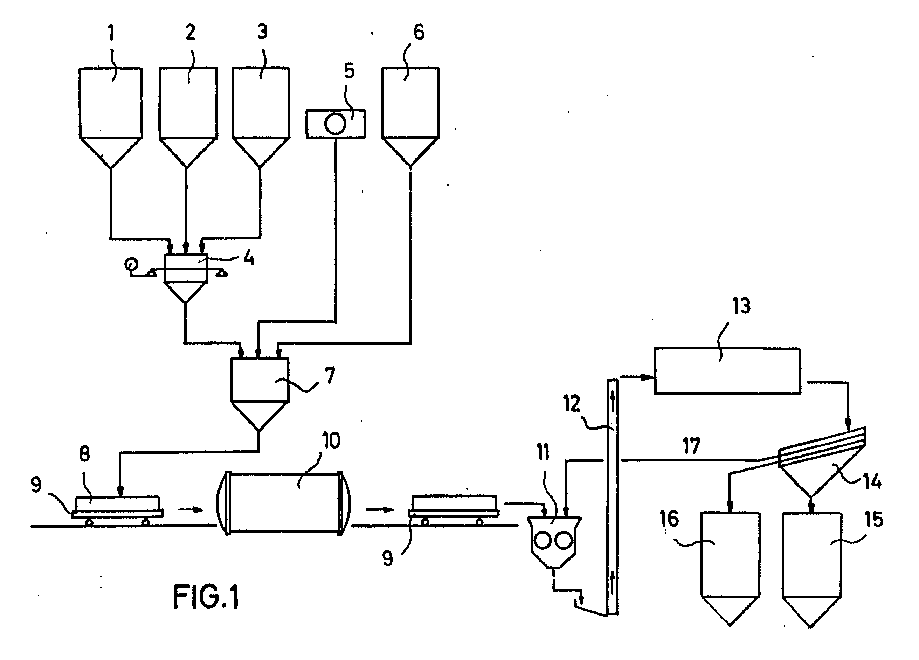

Die Herstellung des verwendeten Calciumsilikatgranulates beziehungsweise -pulvers erfolgte unter Bezugnahme auf die Fig. 1 wie folgt :

Es wurden folgende Ausgangsfeststoffe verwendet :

50,4 Gew.-% Quarzmehl mit einer Korngröße unter 100 µ

33,1 Gew.-% Weißfeinkalk

16,5 Gew.-% Kalkhydrat

Weiterhin wurden 60 Gew.-% Wasser, bezogen auf die Menge der Ausgangsfeststoffe, verwendet.

Es wurden das Quarzmehl aus einem Quarzmehlsilo 1, der Weißfeinkalk aus einem Weißfeinkalksilo 2 und das Kalkhydrat aus einem Kalkhydratsilo 3 über eine Waage 4 in einen Mischer 7 als Dispergiervorrichtung eingebracht. In diesen Mischer 7 wurde auch das Mischwasser aus einem Mischwasserbehälter 6 eingeführt.

Ferner wurde in einem Aktivschaumgenerator 5, bestehend aus einem Kompressor, der komprimierte Luft erzeugte, und einer Ansaugdüse, welche aus einem (nicht dargestellten) Flüssigkeitsbehälter Natriumlaurylsulfat mit einem Aktivsubstanzgehalt von 50 % in 2 %iger Lösung in Wasser ansaugte und diese nach dem Injektorprinzip in den komprimierten Luftstrom einsprühte, ein mikroporiger stabiler Schaum erzeugt. So bildeten sich kleinste Luftbläschen zu einem schlagsahneartigen Schaum.

Nun erfolgte im Mischer 7 das Mischen unter Dispergieren der festen Ausgangsstoffe im Wasser, wobei zunächst 4 Minuten ohne Schaum gemischt und dann der wie vorstehend beschrieben erzeugte mikroporige stabile Schaum eingeführt und 2 Minuten lang in das Gemisch aus den festen Ausgangsstoffen und dem Wasser eingearbeitet wurde.

Danach wurde die fertige Mischung durch ein Rohr in Formkästen 8, die mittels Trennwände in einzelne Kammern unterteilt waren, eingefüllt. Nach einer Vorreaktionszeit von 30 Minuten bei 70 bis 80 °C, welche Temperatur sich durch die Löschreaktionswärme des Weißfeinkalkes einstellte, wurden die Trennwände aus den Formkästen herausgezogen. Die Formkästen 8 mit den so erhaltenen Formlingen wurden zu einem Wagenzug 9 zusammengestellt und in einen Autoklaven 10 zur hydrothermalen Erhärtung eingefahren. Diese erfolgte 7 stunden (Volldruckzeitraum) bei einem Druck von 12 atü.

Der Wagenzug 9 mit den Formkästen 8 mit den gehärteten Calciumsilikatblöcken wurde aus dem Autoklaven 10 nach dessen Entspannung ausgefahren.

Die Formkästen mit den gehärteten Calciumsilikatblöcken wurden vom Wagenzug 9 mittels eines Kranes angehoben, wobei eine Drehung um 90° erfolgte. Da die Umrandungsteile der Formkästen 8 konisch waren, gestatteten sie ein leichtes Herausfallen der Calciumsilikatblöcke aus den letzteren. Die Formkästen 8 wurden nach ihrer Entleerung wieder in den Kreislauf zur erneuten Befüllung zurückgeführt. Die aus den Formkästen 8 entfernten Calciumsilikatblöcke wurden mittels eines Frontladers oder über einen Vorsilobehälter in einen Walzenbrecher 11 eingebracht, in welchem sie gebrochen wurden. Das so gebrochene Calciumsilikat wurde durch ein Gurtbecherwerk 12 zu einem Trockner 13 gefördert. In diesem wurde es bis zu einer Restfeuchte von etwa 3 % getrocknet.

Das getrocknete Calciumsilikat mit Körnern verschiedener Korngröße wurde einer Siebmaschine 14 zugeführt und in dieser in eine Korngruppe mit Körnern bis 2,5 mm, welche in einem Behälter 15 gesammelt wurde, und in eine Korngruppe mit Körnern von 2,5 bis 4 mm, welche in einem anderen Behälter 16 gesammelt wurde, getrennt, wobei das Überkorn durch eine Rücklaufleitung 17 zum Walzenbrecher 11 zurückgeführt wurde. Die erstere Korngruppe konnte in analoger Weise auch noch in eine Korngruppe mit Körnern unter 1 mm und in eine Korngruppe mit Körnern von 1 bis 2,5 mm getrennt werden.

Die durchschnittlichen Materialparameterwerte der erhaltenen Calciumsilikatgranulate beziehungsweise -pulver waren wie folgt :

Druckfestigkeit (gemessen am kompakten Formkörper vor der Zerkleinerung) in N/mm$^2$

| | |
|---|---|
| bei einer Rohdichte von 400 kg/m$^3$ | 7,5 |
| bei einer Rohdichte von 700 kg/m$^3$ | 10,2 |
| Rohdichte in kg/m$^3$ | 400 bis 700 |
| Schüttgewicht in kg/m$^3$ | 250 bis 500 |
| (Schüttgewicht in kg/m$^3$ der Korngrößen bis 2,5 mm | 300 bis 500 |
| Schüttgewicht in kg/m$^3$ der Korngrößen von 2,5 bis 4 mm | 250 bis 450) |
| Saugkapazität in bezug auf Wasser [Wasseraufnahme] (bei einem Schüttgewicht von 450 kg/m$^3$) : | 200 Gew.% |
| pH-Wert : | 9,4 bis 9,8 |

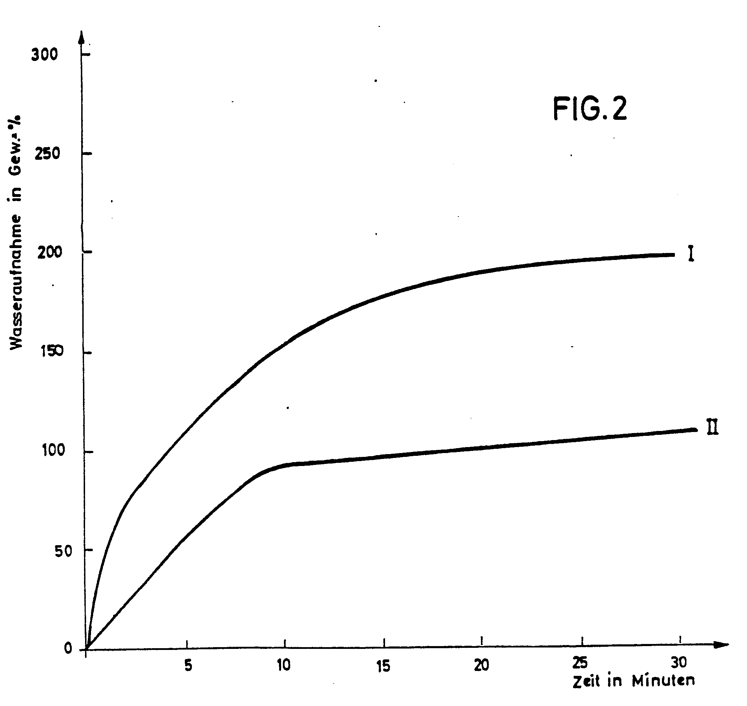

In der Fig. 2 ist auf der Ordinate die Wasseraufnahme in Gew.-% und auf der Abszisse die Zeit in Minuten aufgetragen. Die Kurve I ist der Verlauf der Wasseraufnahme beim wie vorstehend beschrieben hergestellten Calciumsilikatgranulat beziehungsweise -pulver der erfindungsgemäßen Tierstreu und die Kurve II ist der Verlauf der Wasseraufnahme bei einem Handelsprodukt auf Sepiolithbasis, dem bisher besten Katzenstreuhandelsprodukt.

Aus der Fig. 2 geht eindeutig hervor, daß das Calciumsilikatgranulat beziehungsweise -pulver hinsichtlich der Ab- beziehungsweise Adsorption mit einer Wasseraufnahme von 200 Gew.-% dem Handelsprodukt mit einer Wasseraufnahme von nur 100 Gew.-% bei weitem überlegen ist. Da auch bezüglich der Geruchbindung und in den anderen weiter oben erörterten Hinsichten das erstere dem letzteren bei weitem überlegen ist, eignete sich das erstere als überlegene Tierstreu. Sie wurde an einer großen Zahl von Katzen praktisch erprobt.

Beispiel 2

Die Herstellung des verwendeten Calciumsilikatgranulates beziehungsweise -pulvers erfolgte unter Bezugnahme auf die Fig. 1 wie folgt :
Es wurde das Beispiel 1 mit dem Unterschied wiederholt, daß folgende Ausgangsfeststoffe verwendet wurden :
50,4 Gew.-% Quarzmehl mit einer Korngröße unter 100 μ
42 Gew.-% gebrannter Kalk
7,6 Gew.-% Kalkhydrat
Die durchschnittlichen Materialparameterwerte der erhaltenen Calciumsilikatgranulate beziehungsweise -pulver waren wie folgt :
Druckfestigkeit (gemessen am kompakten Formkörper vor der Zerkleinerung) in N/mm²

| | |
|---|---|
| bei einer Rohdichte von 400 kg/m³ | 7,5 |
| bei einer Rohdichte von 700 kg/m³ | 10,2 |
| Rohdichte in kg/m³ | 400 bis 700 |
| Schüttgewicht in kg/m³ | 250 bis 500 |
| (Schüttgewicht in kg/m³ der Korngrößen bis 2,5 mm | 300 bis 500 |
| Schüttgewicht in kg/m³ der Korngrößen von 2,5 bis 4 mm | 250 bis 450) |
| Saugkapazität in bezug auf Wasser [Wasseraufnahme] (bei einem Schüttgewicht von 450 kg/m³) : | 205 Gew.-% |
| pH-Wert : | 9,4 bis 9,8 |

Das so hergestellte Calciumsilikatgranulat beziehungsweise -pulver eignete sich ähnlich vorteilhaft wie das im Beispiel 1 hergestellte als Tierstreu.

Beispiel 3

Die Herstellung des verwendeten Calciumsilikatgranulates beziehungsweise -pulvers erfolgte unter Bezugnahme auf die Fig. 1 wie folgt :
Es wurde das Beispiel 1 mit dem Unterschied wiederholt, daß folgende Ausgangsfeststoffe verwendet wurden :
57 Gew.-% Quarzmehl mit einer Korngröße unter 100 μ
29 Gew.-% gebrannter Kalk
14 Gew.-% Kalkhydrat
Die durchschnittlichen Materialparameterwerte der erhaltenen Calciumsilikatgranulate beziehungsweise -pulver waren wie folgt :
Druckfestigkeit (gemessen am kompakten Formkörper vor der Zerkleinerung) in N/mm²

| | |
|---|---|
| bei einer Rohdichte von 400 kg/m³ | 6,5 |
| bei einer Rohdichte von 700 kg/m³ | 8,5 |
| Rohdichte in kg/m³ | 400 bis 700 |
| Schüttgewicht in kg/m³ | 250 bis 500 |
| (Schüttgewicht in kg/m³ der Korngrößen bis 2,5 mm | 300 bis 500 |
| Schüttgewicht in kg/m³ der Korngrößen von 2,5 bis 4 mm | 250 bis 450) |
| Saugkapazität in bezug auf Wasser [Wasseraufnahme] (bei einem Schüttgewicht von 450 kg/m³) : | 208 Gew.-% |
| pH-Wert : | 9,4 bis 9,8 |

Das so hergestellte Calciumsilikatgranulat beziehungsweise -pulver eignete sich ähnlich vorteilhaft wie das im Beispiel 1 hergestellte als Tierstreu.

**Patentanspruch**

Verwendung von porösem Calciumsilikathydratgranulat bzw. -pulver mit Mikroporenstruktur mit Porenradien von weniger als 100 μm, insbesondere weniger als 60 μm, ganz besonders 10 bis 20 μm, welches durch Umsetzen von kristallinem und ggf. amorphen Siliziumdioxid bzw. dieses oder diese enthaltenden Materialien mit Calciumoxid bzw. dieses enthaltenden Materialien in einem Molverhältnis

von CaO zu SiO₂ von 0,8 : 1 bis 1,1 : 1 unter Homogenisieren derselben durch Dispergieren der festen Ausgangsstoffe in Wasser unter Zugabe einer vorher in Wasser in Gegenwart von Luft in einen Schaum überführten anionenaktiven grenzflächenaktiven Substanz und Formen sowie Autoklavenhärten erzeugt worden ist, mit der weiteren Maßgabe, daß als Schaum ein mikroporiger stabiler Schaum, welcher aus einer durch Verdünnen mit Wasser bereiteten Lösung der anionenaktiven grenzflächenaktiven Substanz in feinster Verteilung in komprimierter Luft erzeugt worden ist und ein Litergewicht von 30 bis 80 g/l aufweist, verwendet worden ist, wobei die anionenaktive grenzflächenaktive Substanz in einer Menge von etwa 300 bis 600 g/m³ Fertigprodukt eingesetzt und das gehärtete Produkt in an sich bekannter Weise zerkleinert, getrocknet und klassiert worden ist, als Tierstreu.

### Claim

Use, as animal litter, of porous calcium silicate hydrate granulate or powder with a micropore structure, with pore radii of less than 100 μm, particularly less than 60 μm, more particularly 10 to 20 μm, which has been produced by reacting crystalline and possibly amorphous silicon dioxide, or materials containing the same, with calcium oxide or materials containing the same, in a molar ratio of CaO to SiO₂ of 0.8 : 1 to 1.1 : 1, with homogenization thereof by dispersion of the solid raw materials in water with the addition of an anion-active interface-active substance previously converted into a foam in water in the presence of air, moulding, and autoclave-hardening, with the further proviso that the foam used is a microporous stable foam which has been produced from a solution of the anion-active interface-active substance in very fine distribution in compressed air, said solution having been prepared by dilution with water, the foam having a weight per litre of 30-80 g/l, the anion-active interface-active substance having been used in a quantity of about 300 to 600 g/m³ finished product and the hardened product having been comminuted, dried and graded in manner known per se.

### Revendication

Emploi comme litière pour animaux d'un granulé, ou d'une poudre, poreux d'hydrate de silicate de calcium à structure microporeuse dont les pores ont un rayon inférieur à 100 μm, en particulier inférieur à 60 μm et tout particulièrement compris entre 10 et 20 μm, qui a été obtenu par réaction de bioxyde de silicium cristallin et éventuellement bioxyde de silicium amorphe, ou des matières contenant celui-ci ou ceux-ci, avec de l'oxyde de calcium, ou des matières contenant celui-ci, dans un rapport molaire du CaO au SiO₂ de 0,8/1 à 1,1/1, en homogénéisant ceux-ci par dispersion des matières de départ solides dans l'eau, avec addition d'une substance à activités interfaciale et anionique, préalablement transformée en matière alvéolaire dans l'eau, en présence d'air, puis mise en forme ainsi que durcissement en autoclave, sous la condition supplémentaire que l'on a utilisé, comme matière alvéolaire, une matière alvéolaire stable microporeuse qui a été obtenue à partir d'une solution, préparée par dilution avec de l'eau, de la substance à activités interfaciale et anionique en distribution très fine dans de l'air comprimé et qui possède un poids au litre de 30 à 80 g/l, la substance à activités interfaciale et anionique ayant été introduite à raison d'environ 300 à 600 g/m³ de produit fini et le produit durci ayant été, de manière connue en soi, broyé, séché et classé.

FIG.1

FIG.2